# EUROPEAN PATENT APPLICATION

(11) **EP 4 737 426 A1**
(43) Date of publication of application: **06.05.2026**
(21) Application number: 24871562.5
(22) Date of filing: 14.08.2024
(51) Int. Cl.: C04B 35/047

(54) **METHOD FOR MANUFACTURING UNBURNED MAGNESIA-CHROME BRICK**

(30) Priority: 26.09.2023 JP 2023163690
(71) Applicant: Krosakiharima Corporation, Kitakyushu-shi, Fukuoka 806-8586 (JP)
(72) Inventor: KAWANO, Hayate, Kitakyushu-shi, Fukuoka 806-8586 (JP)
(74) Representative: Vossius & Partner Patentanwälte Rechtsanwälte mbB
(86) International application number: PCT/JP2024/028986
(87) International publication number: WO 2025/069760

(57) **Abstract**

The present invention addresses a technical problem of suppressing structural spalling in an unfired magnesia-chrome brick. In order to solve this technical problem, the present invention comprises: kneading a refractory raw material mixture containing a magnesia-chrome based raw material in an amount of 73% by mass to 98% by mass in total, an alumina-based raw material in an amount of 1% by mass to 25% by mass in total, and a binder; press-molding the kneaded mixture; and then subjecting the resulting molded body to heat treatment at a temperature of 60°C to 1000°C.

## Description

### TECHNICAL FIELD

The present invention relates to a method for manufacturing an unburned or unfired magnesia-chrome brick used in a steelmaking process, particularly in secondary refining.

### BACKGROUND ART

In a secondary refining process, basic bricks including magnesia-chrome bricks are generally used. When magnesia-chrome bricks are fired at a temperature of 1700°C or more, a chrome-containing spinel develops and forms strong bonds, thereby provides high corrosion resistance. On the other hand, manufacturing of magnesia-chrome bricks requires ultra-high temperature firing at 1700 °C or more, which entails disadvantages such as CO₂ emission and cost increase. Therefore, there has been studied a method for manufacturing an unfired magnesia-chrome brick that does not require firing at high temperatures.

For example, Patent Document 1 discloses a method for manufacturing an unfired refractory material, characterized in that condensed lithium phosphate, in which the ratio by weight of Li₂O/P₂O₅ is in the range of 2.5/7.5 to 1.5/8.5, is used as a binder in an amount of 0.5 to 5 parts by weight with respect to 100 parts by weight of aggregates whose MgO component is adjusted to a range exceeding 50% by mass.

Further, Patent Document 2 discloses a method for manufacturing an unfired magnesia-chrome brick, the method comprising: adding 0.5 to 3.5 parts by weight of sodium aluminate to 100 parts by weight of a refractory composition comprising a magnesia-based raw material and a chromia-based raw material; kneading the resulting mixture; and then subjecting the resulting kneaded mixture to pressure-forming, and drying at a temperature of 100 to 500°C.

### PRIOR ART DOCUMENTS

### [Patent Document]

Patent Document 1: JP S63-24944 B2
Patent Document 2: JP H11-157917 A
Patent Document 3: JP H4-6150 A

### SUMMARY OF INVENTION

### [Technical Problem]

As a result of tests on unfired magnesia-chrome bricks, the present inventor has found that the unfired magnesia-chrome bricks have a problem of being significantly more prone to structural spalling as compared with fired magnesia-chrome bricks. That is, since magnesia-chrome bricks are inherently more prone to slag penetration than graphite-containing bricks such as magnesia-carbon bricks, structural spalling becomes a factor causing wear damage of the magnesia-chrome bricks during use. In this situation, it has been found that, particularly in unfired magnesia-chrome bricks, a significant increase in the severity of structural spalling becomes the biggest factor causing wear damage thereof during use. The term "structural spalling" herein means a phenomenon that an altered portion, which is formed due to slag penetration to have a microstructure significantly different from an original portion, peels off due to cracks developed at the boundary between the original and altered portions by rapid temperature rise and fall during use of a molten metal container.

On the other hand, in Examples of Patent Document 3, there is disclosed a magnesia-chrome based refractory material obtained by: adding an alumina-based raw material having a particle size of 0.35 to 1.0 mm in an amount of 1 to 5 % by weight with respect to and in addition to a total amount of the magnesia-chrome based refractory material to an aggregate that is a blend of sintered magnesia clinker (particle size: 5 mm or less), natural chrome ore (particle size: 5 mm or less), and chrome oxide (fine powder); then molding the resulting mixture under a pressure of 760 kgf/cm²; and further firing the resulting molded body at 1800°C or more. That is, in Patent Document 3, as described in the section [Functions] in the upper right column on page 2, during firing, the alumina-based raw material reacts with magnesia in the aggregate, and undergoes spinelization (spinel formation), whereby volume expansion occurs, which in turn causes microcracks to be formed in the microstructure of the refractory material. In this way, microcracks introduced in the refractory serve to prevent or suppress the development of cracks that occur in the refractory material during use, thereby improving spalling resistance.

However, Patent Document 3 is merely a technique for improving spalling resistance in fired magnesia-chrome bricks, and is not a technique for suppressing structural spalling, which is a problem particularly faced by unfired magnesia-chrome bricks.

The technical problem to be solved by the present invention is to suppress structural spalling in unfired magnesia-chrome bricks.

### [Solution to Technical Problem]

The summary of the present invention is as follows.
1. A method for manufacturing an unfired magnesia-chrome brick, comprising: kneading a refractory raw material mixture containing a magnesia-chrome based raw material in an amount of 73% by mass to 98% by mass in total, an alumina-based raw material in an amount of 1% by mass to 25% by mass in total, and a binder; press-molding the kneaded mixture; and then subjecting the resulting molded body to heat treatment at a temperature of 60°C to 1000°C.
2. The method as set forth in 1, wherein the alumina-based raw material has a particle size of less than 0.1 mm.
3. The method as set forth in 1 or 2, wherein the binder is silica having a particle size of less than 75 µm.
4. The method as set forth in 3, wherein the refractory raw material mixture contains, as the magnesia-chrome based raw material, at least one of magnesia having a particle size of less than 75 µm and magnesia-chrome having a particle size of less than 75 µm, in an amount of 0.2% by mass to 30% by mass in total, and contains, as the binder, silica having a particle size of less than 75 µm in an amount of 0.3% by mass to 2.5% by mass.

### [Advantageous Effects of Invention]

The present invention makes it possible to suppress structural spalling in unfired magnesia-chrome bricks, thereby significantly extending their service life.

### BRIEF DESCRIPTION OF THE DRAWINGS

FIG. 1 is an explanatory diagram showing the shape of a test brick subjected to a rotary corrosion test
FIG. 2 is a photograph showing an example of structural spalling evaluation (example that was evaluated as ⊚).
FIG. 3 is a photograph showing an example of structural spalling evaluation (example that was evaluated as ×).

### DESCRIPTION OF EMBODIMENTS

The inventors have found that, in an unfired magnesia-chrome brick manufacturing method, when a refractory raw material mixture is prepared to contain a specific amount of alumina-based raw material, a Cr-containing spinel having a high content rate of Al is formed in addition to a normal secondary spinel (magnesia-alumina spinel) during use as a lining material of a molten metal container. That is, in commonly-used magnesia-chrome bricks, only a single type of secondary spinel (magnesia-alumina spinel) is formed in the matrix. In contrast, by forming two or more types of spinels having different thermal expansion coefficients in the matrix, it is considered that the stress at the boundary between a slag-infiltrated layer and an original layer can be relieved, thereby suppressing structural spalling.

In the present invention, the content rate of the alumina-based raw material is set in the range of 1% by mass to 25% by mass with respect to 100% by mass of the refractory raw material mixture. If the content rate of the alumina-based raw material is less than 1% by mass, the effect of suppressing structural spalling is insufficient. On the other hand, exceeding 25% by mass causes deterioration in corrosion resistance. The content rate of the alumina-based raw material is preferably 5% by mass to 25% by mass.

Here, in the present invention, the term "alumina-based raw material" means a refractory raw material whose Al₂O₃ content is 50% by mass or more. Examples of the alumina-based raw material include alumina, mullite, spinel, alumina-zirconia, and calcium aluminate. In the present invention, however, from a viewpoint of high melting point and low tendency to form hexavalent chromium through reaction with Cr₂O₃, it is preferable to use one or more selected from the group consisting of alumina, mullite, spinel, and alumina-zirconia. Further, the particle size of the alumina-based raw material used in the present invention is preferably less than 0.1 mm, from a viewpoint of promoting the formation of secondary spinels in the matrix.

Among the above alumina-based raw materials, as the alumina, it is possible to suitably use electrofused alumina, sintered alumina, and calcined alumina. Alternatively, bauxite, fired alum shale, and the like may also be used. In particular, calcined alumina having an average particle size of 10 µm or less provides a higher effect because of its high reactivity. Further, when giving weight to corrosion resistance, alumina whose content rate of Al₂O₃ is 90% by mass or more may also be used.

As the mullite, it is possible to suitably use mullite whose total content rate of Al₂O₃ and SiO₂ is 90% by mass or more, and specifically to use sintered mullite and electrofused mullite, for example.

As the spinel, it is possible to suitably use a spinel in which: the content rate of Al₂O₃ content is 60 to 90% by mass; the content of MgO is 10 to 40% by mass; and the total content rate of Al₂O₃ and MgO is 95% by mass or more. A spinel having such a composition is referred to as a magnesia-alumina spinel, an alumina spinel, or the like. In the present invention, it is referred to simply as "spinel."

As the alumina-zirconia, it is possible to suitably use alumina-zirconia in which: the content rate of Al₂O₃ is 50 to 70% by mass; the content rate of ZrO₂ is 30 to 50% by mass; and the total content rate of Al₂O₃ and ZrO₂ components is 95% by mass or more.

In the present invention, a magnesia-chrome based raw material is used as a main raw material to manufacture an unfired magnesia-chrome brick. Here, the term "magnesia-chrome based raw material" in the present invention means a main raw material for a magnesia-chrome brick, i.e., a refractory raw material serving as a magnesia source and a chrome source. It is possible to use, as the magnesia source, magnesia or magnesia-chrome and to use, as the chrome source, chrome ore, chrome oxide, or magnesia-chrome. Depending on an intended type of magnesia-chrome brick, these magnesia-chrome based raw materials may be appropriately selectively used to obtain the intended type of magnesia-chrome brick. For example, in the case of re-bonded type magnesia-chrome bricks, magnesia-chrome is mainly used, and in the case of semi-re-bonded type magnesia-chrome bricks, magnesia and either chrome ore or chrome oxide are used together with magnesia-chrome. Further, in the case of direct-bonded type magnesia-chrome bricks, magnesia and either chrome ore or chrome oxide are mainly used. In either case, in the present invention, the magnesia-chrome based raw material is used at a total content rate of 73% by mass to 98% by mass with respect to 100% by mass of the refractory raw material mixture.

The magnesia-chrome used in the present invention is a synthetic raw material obtained by melting magnesia and chrome ore or the like in an arc furnace or by firing them in a firing furnace, and is also referred to as magnesia-chrome clinker, electrofused magnesia-chrome clinker, electrofused magnesia-chrome, fused magnesia-chrome, or the like. Any magnesia-chrome commonly used as a raw material for refractory products may be employed. Further, a recycled raw material obtained by pulverizing and granulating damaged or used magnesia-chrome bricks may also be employed.

As the magnesia used in the present invention, any magnesia commonly used as a raw material for refractory products may be employed, wherein such magnesia includes electrofused magnesia and sintered magnesia.

Further, as described above, in the present invention, at least one of chrome ore and chrome oxide can be used as a chrome source for the magnesia-chrome bricks. In this case, the content rate of chrome ore may be set to 40% by mass or less, and the content rate of chrome oxide may be set to 10% by mass or less. As the chrome ore, naturally-occurring chrome ore may be used.

In the present invention, the refractory raw material mixture may contain, as a refractory raw material other than the above-mentioned alumina-based and magnesia-chrome-based materials, one or more of metal powder, silicon carbide, graphite, pitch, carbon black, boron carbide, and titania, in amount of 5% by mass or less.

Further, in the present invention, a binder is used to enable an unfired magnesia-chrome brick to exhibit strength through heat treatment at 60°C to 1000°C. As the binder, any heretofore-known binder, such as lithium phosphate, sodium aluminate, magnesium chloride, silica fine powder, magnesium sulfate, gypsum (calcium sulfate), or phenolic resin, may be employed. Among them, a silica fine powder is easy to use because it is almost free from generation of hexavalent chromium and from toxic gas, odor, and smoke that can occur during heat receiving, and exhibits excellent corrosion resistance and sufficient hot strength at intermediate temperatures.

That is, since the silica fine powder forms a gel-like magnesium silicate hydrate in the presence of water and at least one of a magnesia fine powder and a magnesia-chrome fine powder, each of which a kind of the magnesia-chrome based raw material contained in the refractory raw material mixture, the water content in the brick decreases even by heat treatment at 60°C or more, and therefore the silica fine powder functions as a binder in the matrix region of the brick. Then, even when the temperature of the brick rises and the magnesium silicate hydrate is dehydrated, the strength is maintained because an amorphous magnesium silicate bond is formed, and when further receiving heat, the amorphous magnesium silicate becomes forsterite, which makes it possible to suppress the decrease in strength up to the service temperature. Further, this magnesium silicate bond is characterized in that it particularly has high hot strength at 600 to 1000°C, and when the unfired magnesia-chrome brick is used as a lining material of a molten-metal container, the magnesium silicate bond exhibits a great effect of suppressing spalling on the working surface of the brick caused by embrittlement of the microstructure of the brick.

Specifically, in the present invention, it is preferable to use, as a silica component for forming the magnesium silicate hydrate, a silica fine powder at a content rate of 0.3% by mass to 2.5% by mass with respect to 100% by mass of the refractory raw material mixture. In this case, it is also preferable to use, as a magnesium component for forming the magnesium silicate hydrate, at least one of a magnesia fine powder and a magnesia-chrome fine powder at a total content rate of 0.2% by mass to 30% by mass with respect to 100% by mass of the refractory raw material mixture.

In the present invention, considering that as the particle size of each of the silica fine powder, the magnesia fine powder, and the magnesia-chrome fine powder becomes smaller, they can more easily form hydrates in the presence of water, a particle size of less than 75 µm is used as a specific particle size of each of the above fine powders. That is, the terms "silica fine powder," "magnesia fine powder," and "magnesia-chrome fine powder" in the DESCRIPTION refer, respectively, to silica, magnesia, and magnesia-chrome fine powders each having a particle size of less than 75 µm.

As the silica fine powder, it is possible to use silica flour, fused silica, silica sol, or silica fine powder. Since silica sol is in a liquid form, its content rate is expressed as an equivalent amount of SiO₂.

In the present invention, "silica flour" means fine-particle silica having an average particle size of 10 µm or less, and refers collectively to silica fume, fumed silica, and white carbon. The silica fume is a by-product obtained by collecting exhaust gas generated during a refining process of ferrosilicon, metallic silicon, electrofused zirconia, or the like, and is available relatively inexpensively. The fumed silica is produced by hydrolyzing a silicon compound including silicon tetrachloride, in an oxygen-hydrogen flame. The white carbon is obtained by decomposing sodium silicate using acid or alkali. Such silica flour is prone to dissolve in the alkaline water in which a portion of the magnesia fine powder has dissolved, so that the magnesium silicate bond in the brick microstructure develops well, so that it is possible to increase the strength of the brick.

As the magnesia fine powder, it is possible to use light-fired magnesia (i.e., light-burned magnesia). The light-fired magnesia is obtained by firing magnesite, magnesium hydroxide, or the like at a relatively low temperature of, e.g., 1400°C or less, typically between 1000 to 1400°C. Generally, it is also referred to as "active magnesia" or "calcined magnesia", wherein it has an average particle size of 1 µm or less. Since this light-fired magnesia has a large specific surface area and is highly active, it is easily dissolved in water as compared with sintered magnesia or electrofused magnesia. Thus, the magnesium silicate bond is well developed in the brick microstructure, so that it is possible to increase the strength of the brick. This light-fired magnesia may be used at a content rate of 0.2% by mass to 5% by mass with respect to 100% by mass of the refractory raw material mixture.

Here, the term "particle size" in the present invention means a sieve mesh size when refractory raw material particles are screened and separated by a sieve. For example, magnesia having a particle size of less than 75 µm means magnesia which can pass through a sieve having a mesh size of 75 µm, and magnesia having a particle size of 75 µm or more means magnesia which cannot pass through the sieve having a mesh size of 75 µm.

Further, the term "average particle size" in the present invention means a volume average particle size corresponding to a median cumulative value (D50) of a cumulative curve measured by a laser diffraction scattering particle size distribution meter.

In the unfired magnesia-chrome brick manufacturing method according to the present invention, after optionally adding water, an organic solvent, or the like to the above-mentioned refractory raw material mixture, as needed, the resulting mixture is subjected to kneading, press-molding, and then heat treatment at a temperature of 60°C to 1000°C.

### EXAMPLES

Table 1 shows the composition of a refractory raw material mixture and evaluation results of the obtained brick in each of Inventive Examples and Comparative Examples.

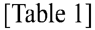

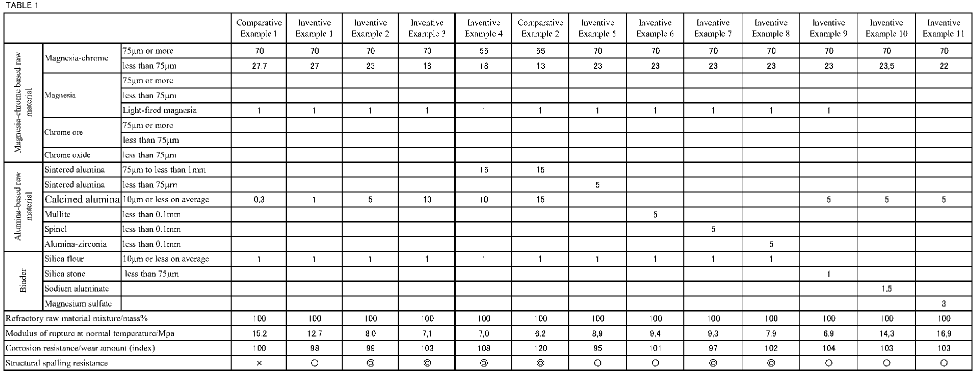

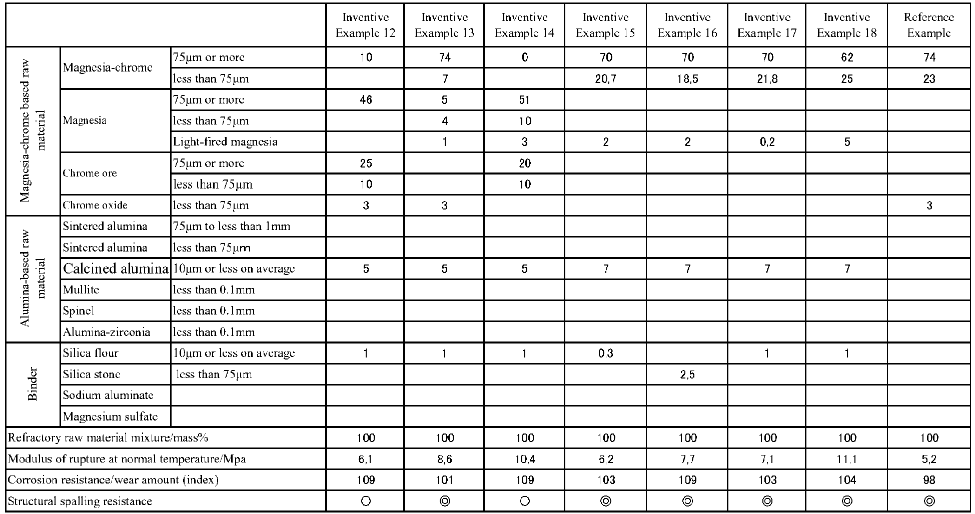

Among refractory raw materials, as magnesia-chrome, electrofused magnesia-chrome comprising 74% by mass of MgO and 16% by mass of Cr₂O₃ was used, and, as magnesia, electrofused magnesia and light-fired magnesia each having a MgO purity of 98% by mass was used. Further, chrome ore comprising 55% by mass of Cr₂O₃,14% by mass of Fe₂O₃,16% by mass of MgO, and 11% by mass of Al₂O₃ was used. Further, sintered alumina and calcined alumina each comprising 98% by mass of Al₂O₃, mullite comprising 77% by mass of Al₂O₃ and 23% by mass of SiO₂, spinel comprising 75% by mass of Al₂O₃ and 25% by mass of MgO, and alumina-zirconia comprising 70% by mass of Al₂O₃ and 30% by mass of ZrO₂ were used. Further, as a silica fine powder as silica having a particle size of less than 75 µm, silica flour comprising 98% by mass of SiO₂, and a silica stone fine powder comprising 98% by mass of SiO₂ were used.

Except for Reference Example which is a fired magnesia-chrome brick fired at 1750°C, an unfired magnesia-chrome brick was prepared by: adding water to each refractory raw material mixture in a moderate amount; kneading the resulting mixture; molding the kneaded mixture into a shape of 230 mm × 114 mm × 100 mm by oil press; and then subjecting the resulting molded body to heat treatment at 250°C for a holding time of 5 hours. Samples for measuring physical properties were cut out from each prepared brick, and subjected to measurements of cold modulus of rupture at normal temperature and hot modulus of rupture at 600°C and to evaluations of structural spalling resistance and corrosion resistance.

The cold modulus of rupture was measured by three-point bending method. Specifically, a reed-shaped sample having a size of 20 × 20 × 80 mm was prepared, and subjected to measurement of the modulus of rupture at a pressing speed of 1.65 kN/s.

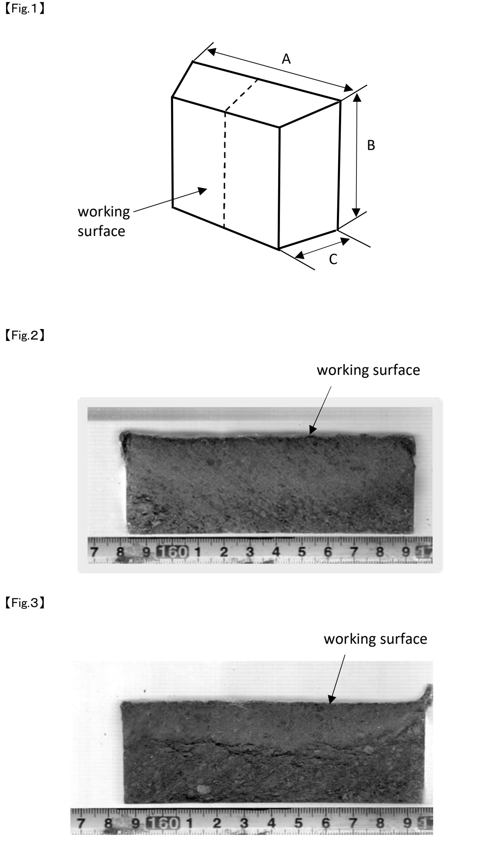

The structural spalling resistance and the corrosion resistance were evaluated by a rotation corrosion test. In the rotation corrosion test, the inner surface of a drum having a horizontal rotation axis was lined with the test brick, and slag was charged into the drum and heated, thereby causing corrosion of the surface of the brick. An oxygen-propane burner was used as a heating source, and a test temperature was set to 1700°C. Further, the slag had a composition of CaO: 30% by mass, SiO₂: 30% by mass, Al₂O₃: 20% by mass, and FeO + Fe₂O₃: 20% by mass, and the discharge and charge of the slag were repeated ten times every 30 minutes. After completion of the test, a central portion of each brick was cut along a direction parallel to the rotation axis to observe respective states of cracks and wear loss. The test brick (test piece) was formed in the following dimensions (see FIG. 1): A = 100 m; B =110 mm; and C = 40 m. Note that a surface that is in contact with the slag during the test, i.e., a working surface, of the brick, is as shown in FIG. 1, and the cut position of the brick after completion of the test is indicated by the dotted line in FIG. 1.

With regard to the structural spalling resistance, the size of cracks parallel to the working surface (see FIG. 1), which occur at the boundary between a slag-infiltrated layer and an original layer on the cut surface, was measured, and each test piece was evaluated on a three-level scale: large (×), small (∘), and none (⊚).
× : A test piece in in which the total length of cracks is 40% or more of the height B thereof.
∘ : A test piece in which the total length of cracks is less than 40% of the height B thereof .
⊚ : A test piece having no crack.

Note that FIG. 2 shows an example evaluated as ⊚ (Inventive Example 2), and FIG. 3 shows an example evaluated as × (Comparative Example 1).

Regarding the corrosion resistance, a corrosion (wear) amount (mm) was obtained from the difference (mm) between thicknesses before and after the test in the maximum worn area on the cut surface. Then, a wear index on the basis of the corrosion amount (mm) of "Comparative Example 1" listed in Table 1 being taken as 100 was obtained. A smaller value of this wear index indicates better corrosion resistance.

Inventive Examples 1 to 4, which are different from each other in terms of the content rate of the alumina-based raw material, but fall within the scope of the present invention, had a good result in both the corrosion resistance and structural spalling resistance. In contrast, Comparative Example 1, in which the content rate of the alumina-based raw material is less than the lower limit in the present invention, exhibited prominent structural spalling. Further, Comparative Example 2, in which the content rate of the alumina-based raw material exceeds the upper limit in the present invention, exhibited significant deterioration in corrosion resistance.

Inventive Examples 5 to 8, which are different from each other in terms of the type of the alumina-based raw material, but fall within the scope of the present invention, had a good result in both the corrosion resistance and structural spalling resistance.

Inventive Examples 9 to 11, which are different from each other in terms of the type of binder, but fall within the scope of the present invention, had a good result in both the corrosion resistance and structural spalling resistance.

Inventive Examples 12 and 13, which are examples of a semi-re-bonded type magnesia-chrome brick, but fall within the scope of the present invention, and Inventive Example 14, which is an example of a direct-bonded type magnesia-chrome brick, but falls within the scope of the present invention, had a good result.

Inventive Examples 15 and 16, which are different from each other in terms of the content rate of the silica fine powder, but fall within the scope of the present invention, and Inventive Examples 17 and 18, which are different from each other in terms of the content rate of the light-fired magnesia, but fall within the scope of the present invention, had a good result.

Reference Example, which is a fired magnesia-chrome brick fired at 1750°C, exhibited satisfactory corrosion resistance and structural spalling resistance without any problems.

## Claims

1. A method for manufacturing an unfired magnesia-chrome brick, comprising:
kneading a refractory raw material mixture containing a magnesia-chrome based raw material in an amount of 73% by mass to 98% by mass in total, an alumina-based raw material in an amount of 1% by mass to 25% by mass in total, and a binder;
press-molding the kneaded mixture; and
then subjecting the resulting molded body to heat treatment at a temperature of 60°C to 1000°C.

2. The method as claimed in claim 1, wherein the alumina-based raw material has a particle size of less than 0.1 mm.

3. The method as claimed in claim 1 or 2, wherein the binder is silica having a particle size of less than 75 µm.

4. The method as claimed in claim 3, wherein the refractory raw material mixture contains, as the magnesia-chrome based raw material, at least one of magnesia having a particle size of less than 75 µm and magnesia-chrome having a particle size of less than 75 µm, in an amount of 0.2% by mass to 30% by mass in total, and contains, as the binder, silica having a particle size of less than 75 µm in an amount of 0.3% by mass to 2.5% by mass.
